# FASCICULE DE BREVET EUROPEEN

(11) **EP 4 345 682 B1**
(45) Date de publication et mention de la délivrance du brevet: **14.05.2025**
(21) Numéro de dépôt: 23194625.2
(22) Date de dépôt: 31.08.2023
(51) Int. Cl.: G06K 19/02, B42D 25/45, G06K 19/07, G06K 19/077

(54) **CARTE À PUCE MÉTALLIQUE**
METALLCHIPKARTE
METAL SMART CARD

(30) Priorité: 29.09.2022 FR 2209874
(43) Date de publication de la demande: 03.04.2024
(73) Titulaire: IDEMIA France, 92400 Courbevoie (FR)
(72) Inventeur: ALI, Ahmed, 92400 Courbevoie (FR); GROULT, Tiphaine, 92400 Courbevoie (FR)
(74) Mandataire: Simon, Géraldine Marie

(56) Documents cités:
- CH-A2- 718 335
- FR-A1- 3 105 856
- US-A1- 2021 154 898

## Description

### Domaine technique

L'invention porte sur les cartes à puce et plus particulièrement sur les cartes à puce comprenant une antenne permettant une communication sans contact avec un lecteur.

L'invention porte particulièrement sur les cartes à puce munies d'une antenne et présentant un corps constitué d'au moins une couche métallique, réalisée en métal rigide d'une épaisseur supérieure à 100µm. Ce type de carte présente l'intérêt d'offrir une carte « lourde », cet aspect étant associé à une impression de solidité et de qualité, critères étant recherchés par les utilisateurs.

### Technique antérieure

Il est connu de l'art antérieur des cartes à puces comportant une puce et une antenne. Ces cartes à puce sont paramétrées pour communiquer avec un lecteur externe soit en contact, par insertion de la carte dans le lecteur, soit à distance, en mode sans-contact, en rapprochant la carte du lecteur. La communication sans contact est générée dans les radiofréquences (RF), tels que spécifiés dans la normes ISO 14443 / ISO15693 et ISO 10373-6 à 13, 56MHz.

Ces cartes à puce sont généralement des cartes bancaires utilisées pour effectuer des transactions bancaires, mais elles peuvent aussi servir comme moyen d'accès aux transports, ou encore comme carte de fidélité ou carte d'adhésion à un service médical ou administratif. Elles présentent généralement une forme rectangulaire de dimensions :85,60mm × 53,98mm et d'épaisseur 0,76 mm, tel qu'énoncé dans la norme ISO 7810.

Lorsque ces cartes à puce sont munies d'une couche métallique, cela entraine des contraintes pour la communication sans contact avec un lecteur. En effet la couche métallique agit comme un blindage électromagnétique sur l'antenne, ce qui empêche ou perturbe la communication RF avec un lecteur externe. Les échanges avec le lecteur présentent une qualité insuffisante, ce qui peut entraîner l'impossibilité d'une transaction par exemple.

Ce type de carte métallique a donc été adapté pour permettre la communication sans contact. A cet effet, il est connu de l'art antérieur une carte à puce métallique comprenant une cavité et une fente traversantes créées dans la couche métallique. La fente débouche sur l'extérieur de la carte pour atténuer les courants de Foucault. L'antenne, déposée sur un substrat, est positionnée dans la cavité. La couche métallique entoure ainsi l'antenne, mais ne la recouvre pas, l'effet de blindage est donc diminué. Les effets des courants de Foucault sont diminués par la présence de la fente. Toutefois, l'aspect visuel de la carte n'est pas satisfaisant en ce que l'antenne et son substrat sont alors visibles depuis les deux faces de la carte. Il est possible de recouvrir l'antenne et la couche métallique par une couche imprimée, mais cette solution est écartée car l'utilisateur recherche une carte ayant un effet visuel métallique, cette carte étant alors perçue comme une carte luxueuse.

Il est connu du document FR3105856, une solution pour recouvrir partiellement l'antenne avec la couche métallique sans dégrader les performances de communication de l'antenne. Dans cette solution, la cavité créée dans la couche métallique présente un fond formé par une paroi munie d'ouvertures traversantes. Ces ouvertures assurent que le flux magnétique n'est pas dévié, permettant ainsi une communication sans contact avec un lecteur externe de qualité suffisante.

Toutefois cette structure est complexe et coûteuse à réaliser, notamment pour découper les zones dépourvues de métal au centre de la couche métallique et disposées en regard de l'antenne.

La présente invention vise à remédier ce problème en proposant une carte à puce métallique comprenant
- un corps de carte formé d'au moins une couche diélectrique et une couche métallique superposée à la couche diélectrique
- la couche métallique comprenant une cavité traversant son épaisseur et présentant un contour, la couche métallique comprenant en outre une fente traversant son épaisseur et s'étendant depuis la cavité vers un bord du corps de carte,
- la carte comprenant en outre une antenne s'étendant dans la cavité de la couche métallique,

caractérisée en ce que la carte comprend en outre au moins une étiquette métallique recouvrant au moins partiellement la cavité et l'antenne, l'étiquette étant fixée sur l'une des faces de la carte, l'étiquette métallique comportant une couche métallique, la couche métallique comportant un motif représenté par des lignes de métal gravées,
le motif de l'étiquette comportant une première partie formée de premières lignes de métal gravées délimitant au moins une zone au moins partiellement métallique
et une deuxième partie constituée de deuxièmes lignes de métal gravées formant uniquement des boucles ouvertes
chaque deuxième ligne de la deuxième partie du motif prolonge une première ligne de la première partie du motif, de sorte que la deuxième partie du motif forme la continuité de la première partie du motif pour former le motif dans son intégralité,
et en ce que l'étiquette métallique est positionnée de sorte que seule la deuxième partie du motif soit disposée en regard de l'antenne.

Grâce à ces dispositions, la carte à puce présente un aspect visuel métallisé sur une grande partie de la surface de la carte, tout en permettant une communication sans contact avec un lecteur externe. De plus chaque étiquette est personnalisable et le titulaire de la carte peut donc obtenir un motif unique, ce qui tend à augmenter le prestige associé à la carte.

D'autres caractéristiques avantageuses et non limitatives du procédé conforme à ce premier mode de réalisation, prises individuellement ou selon toutes les combinaisons techniquement possibles, sont les suivantes :
les deuxièmes lignes de métal s'étendent entre une extrémité proximale et une extrémité distale et ne présentent aucune intersection avec une autre première ou deuxième ligne de métal,
   - le contour de la deuxième partie est délimité par la ligne fictive joignant l'ensemble des points formant les extrémités proximales et les extrémités distales des deuxièmes lignes de métal de la deuxième partie, la ligne fictive joignant les extrémités proximales étant sensiblement superposée au contour de la cavité,
l'étiquette métallique est amovible,
   - la deuxième partie du motif recouvre au plus la moitié de la surface de l'antenne les deuxièmes lignes de métal recouvrant la surface de l'antenne sont agencées de sorte que le cumul de surface formée par les deuxièmes lignes est inférieur à la moitié de la surface de l'antenne recouverte par la deuxième partie du motif,
   - les deuxièmes lignes de métal présentent une largeur de 1mm maximum,
   - le corps de carte comporte une couche plastique imprimée recouvrant la couche en métal et la cavité, la couche imprimée présentant des marques de positionnement pour positionner l'étiquette sur le corps de carte,
   - la couche imprimée forme une impression recouvrant la cavité, l'impression étant complémentaire aux deuxièmes lignes de métal, de sorte guider le positionnement de l'étiquette sur la carte et de sorte à former une deuxième partie de motif colorée,
   - les lignes en métal sont formées à partir d'un métal peu conducteur présentant une conductivité inférieure ou égale à 40*10⁶ *S*.*m*⁻¹ (Siemens par mètre),
   - une puce est connectée aux extrémités de l'antenne et intégrée dans le corps de la carte à puce, la puce étant positionnée en regard d'une zone dépourvue de lignes métalliques.

D'autres caractéristiques et avantages de la présente invention ressortiront de la description faite ci-dessous, en référence aux dessins annexés qui en illustrent des exemples de réalisation dépourvus de tout caractère limitatif.
La Figure 1 est une vue schématique en coupe d'une carte à puce selon l'invention ;
La figure 2 est une vue de face d'une carte à puce selon l'invention dans laquelle l'étiquette représente un premier motif
La figure 3 est une vue similaire à celle de la Figure 2 représentant une carte à puce selon l'invention dans laquelle l'étiquette représente un deuxième motif,
La figure 4 cest une vue similaire à celle de la figure 2 représentant une carte à puce selon l'invention dans laquelle l'étiquette représente un troisième motif, l'étiquette étant illustrée en la fi-gure 4a, et le corps de la carte de la figure Fig. 4b.

### Description des modes de réalisation

Il est connu de l'art antérieur plusieurs types de structures de cartes métalliques. Les cartes à puce métalliques comportent généralement un corps formé d'une ou plusieurs couches diélectriques, non conductrices, c'est-à-dire ne pouvant pas conduire le courant électrique, telles qu'une couche en plastique ou une couche de résine, et d'au moins une couche de métal. L'assemblage de la couche métallique avec la couche diélectrique peut être réalisé de différentes manières bien connues de l'homme du métier, par exemple par collage ou encore par lamination avec une couche en plastique ou encore par enrobage de la couche métallique dans une couche de résine. A titre d'exemple les couches en plastique sont constituées de polymères tels que du PVC, PET, PC, ABS.

Les cartes à puce métalliques comportent une antenne pour pouvoir communiquer à distance avec un lecteur. Comme indiqué dans le préambule, il s'agit alors d'un fonctionnement appelé mode « sans contact NFC ». Dans ce cas, il est nécessaire d'adapter la structure de la couche métallique afin que cette dernière ne forme pas un blindage métallique perturbant, voire empêchant la communication avec un lecteur externe.

Certains choix de l'art antérieur ont résolu ce problème en permettant une communication sans contact lorsque la carte est positionnée selon une orientation particulière. A cet effet, l'antenne est complètement recouverte par la couche métallique uniquement sur une première face de la carte, ce qui permet à l'antenne de pouvoir communiquer avec un lecteur uniquement depuis une deuxième face de la carte. Cela impose à l'utilisateur d'orienter la carte de sorte que la deuxième face soit placée en vis-à-vis du lecteur pour que la couche métallique ne soit pas positionnée entre l'antenne et le lecteur et ainsi que le signal de communication ne soit pas perturbé par cette couche métallique. Ce mode de réalisation est contraignant en ce qu'il impose à l'utilisateur une orientation particulière de la carte. De plus, l'épaisseur de la couche métal est limitée par la présence d'une couche de blindage magnétique, telle qu'une couche de ferrite, et par l'épaisseur globale de la carte qui doit rester conforme à la norme ISO7810, c'est-à-dire une épaisseur comprise sensiblement égal à 760µm. Par conséquent, la proportion de métal dans la carte est donc limitée, et ainsi l'augmentation de la masse de la carte est aussi limitée. De plus l'aspect visuel de la carte sur la deuxième face est un aspect plastique, ce qui ne correspond donc pas aux attentes de l'utilisateur.

L'invention propose un nouveau type de carte à puce 10 métallique comprenant un corps 12 de carte, s'étendant entre une face supérieure et une face inférieure, et formé d'au moins une couche métallique 14, éventuellement recouverte d'un revêtement coloré, tel qu'une encre ou un oxyde métallique, ou encore une couche diélectrique telle qu'une couche plastique 40 recevant une impression 42. La couche métallique présente les mêmes dimensions en surface que la face supérieure et la face inférieure du corps de carte. Le corps 12 de carte est délimité par un bord présentant plusieurs épaisseurs, dont celle de la couche métallique.

La couche métallique 14 est délimitée entre une première face et une deuxième face présentant les dimensions d'une carte à puce 10 telles que défini dans la norme ISO7810. La couche métallique 14 est réalisée dans un métal, de préférence ayant une densité élevée et résistant à la corrosion. A titre d'exemple le métal choisi est de l'acier inoxydable, de l'argent, de l'or, du cuivre ou encore du tungstène. La couche métallique 14 comporte en outre une cavité 16 traversante, débouchant sur la première et deuxième faces. Cette cavité 16 présente une forme adaptée à recevoir un ou plusieurs composants électroniques, passifs ou actifs, montés sur un substrat, l'ensemble étant appelé « inlay 20 ».

La couche métallique 14 comporte en outre une fente15 traversant l'épaisseur de la couche métallique 14 et s'étendant entre la cavité 16 et un bord externe de la couche métallique 14, formant une partie de l'épaisseur du bord externe du corps de carte. Cette fente 15 permet avantageusement de limiter ou d'empêcher la formation des courants de Foucault pouvant perturber les performances de communication de l'antenne 22. En effet, ces fentes limitent les principales boucles de courant de Foucault susceptibles d'être générées autour de l'antenne 22

Selon l'invention, la cavité 16 de la couche métallique 14 accueille un inlay 20 formé d'une antenne 22 agencée sur un substrat diélectrique, et éventuellement d'une puce connectée aux extrémités de l'antenne 22. La cavité 16 de la couche métallique 14 est délimitée par un contour 18 plus grand que celui de l'inlay 20, de sorte que ce dernier puisse être logé intégralement dans la cavité 16. De préférence, l'inlay 20 et donc l'antenne 22 s'étend dans un plan de la cavité 16 de couche métallique 14.

Le substrat de l'inlay 20 traditionnellement utilisé est un polymère très stable aux changements de température. Cela peut être un polyimide, tel que du kapton, stable dans une plage étendue de température allant de -200°C à + 400°C, ce qui permet de rester stable lors des différentes étapes de fabrication de la carte, lors des montées en température.

L'antenne 22 comprend une ou plusieurs spires électriquement conductrices permettant d'établir une communication sans contact avec un terminal externe (non représenté) prévu à cet effet. Les spires de l'antenne 22 peuvent être formées par une piste, un fil ou un membre électriquement conducteur déposé sur un support (non représenté). Diverses techniques de fabrication (filaire, par dépôt additif, par gravure) bien connues en soi peuvent être utilisées pour réaliser une telle antenne 22 RF. Les caractéristiques physiques (forme/taille de l'intersection, longueur de l'antenne 22, nombre de spire, matériau, etc.) de l'antenne 22 peuvent être adaptées au cas par cas afin notamment de permettre des communications sans fil à la fréquence (ou plage de fréquences) souhaitée.

La puce peut être connectée directement aux extrémités de l'antenne 22 dans le corps 12 de carte, ou montée sur module monté affleurant à la surface de la carte et connectée aux extrémités de l'antenne 22 par des techniques connues de l'homme du métier, tel qu'un adhésif conducteur anisotropique.

Généralement, la couche métallique 14 et l'inlay 20 sont enrobés dans une résine durcie après réticulation et adaptée à recevoir un revêtement coloré ou une couche en polymère imprimée.

Afin d'éviter de masquer l'aspect métallique, la résine est choisie transparente. De plus, afin que les deux surfaces de la carte soient lisses, une couche plastique 40 en polymère est assemblée de chaque côté de l'ensemble formé par la couche métallique 14 enrobé de résine. Mais l'inlay 20 et l'antenne 22 restent alors complètement visibles, ce qui rend la carte inesthétique.

L'invention propose de positionner une étiquette 24 métallique sur une ou les deux faces de la carte afin de recouvrir visuellement la cavité 16 recevant l'antenne 22. L'étiquette 24 comporte un substrat 26 recevant sur une face un adhésif 28 pour la fixation de ladite étiquette 24 et sur l'autre face une couche métallique 14.

Selon une variante de réalisation non illustrée, l'étiquette comporte seulement un substrat recevant la couche métallique, et est fixée par un adhésif dissocié de l'étiquette et déposé sur le corps de carte.

Il est aussi possible de remplacer l'adhésif par tout autre moyen de fixation connu et évident pour l'homme du métier, ce moyen de fixation pouvant être assemblé directement sur le substrat de l'étiquette ou encore indépendant de l'étiquette et disposé sur le corps de carte.

Il est ainsi possible d'améliorer l'aspect visuel de ces cartes et pour en accentuer l'effet métallique en recouvrant au moins partiellement l'inlay 20 de l'antenne 22, sans modifier les procédés de fabrication existant, et sans modifier la structure interne du corps 12 de carte.

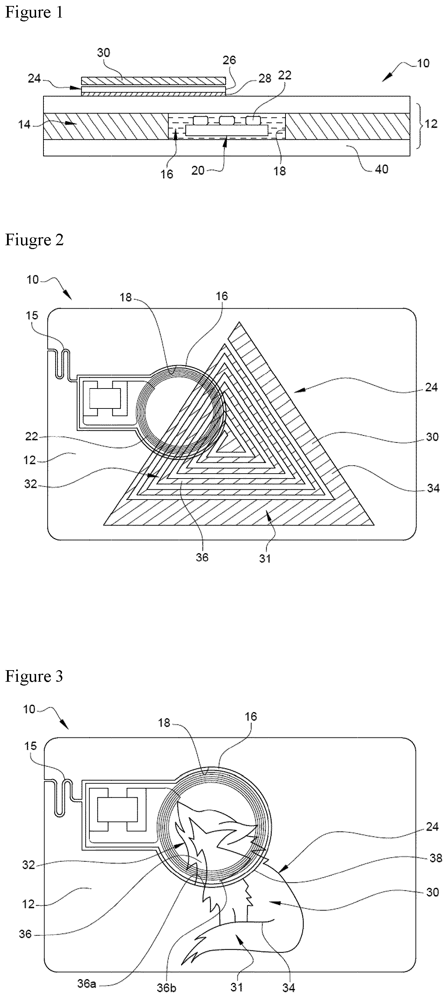

L'étiquette 24 métallique définit un motif 30 visuel formé à partir de lignes de métal gravées sur le substrat 26. Divers exemples de motifs 30 sont illustrés sur les figures 2 à 4 de la présente demande. Les lignes de métal sont réalisées dans un métal peu conducteur, tel que de l'aluminium ou des oxydes de métaux qui ont une conductivité inférieure à 40*10⁶ *S*.*m*⁻¹ (Siemens par mètre) et qui permettent de laisser passer le flux magnétique. Comme représenté sur les figures 2 à 4, ces motifs 30 peuvent représenter un objet ou un animal, mais toute autre forme pourrait être utilisée dans les conditions énoncées ci-après.

L'étiquette 24 est constituée de sorte à limiter les perturbations affectant les performances de l'antenne 22 et les effets parasites gênant la communication avec un lecteur externe. A cet effet l'étiquette 24 comporte une première partie 31 formée de premières lignes 34 de métal gravées et une deuxième partie 32 et constituée de deuxièmes lignes 36 de métal gravées formant uniquement des boucles ouvertes. Seule la deuxième partie 32 est située en regard de l'antenne, la première partie 31 étant disposée en périphérie d'une zone formée par la projection de l'antenne dans le plan de l'étiquette.

Les premières lignes 34 de métal gravées délimitent entre elles au moins une zone métallique pleine de métal ou partiellement remplie de métal. Toutes les dispositions des premières lignes sont envisageables car la première partie 31 de l'étiquette 24 n'est pas en regard de l'antenne et n'a donc pas d'impact sur les performances de communication de l'antenne. IL peut donc être envisagé que les premières lignes 34 de métal forment des boucles ouvertes ou des boucles fermées qui délimitent une ou plusieurs zones totalement ou partiellement remplies de métal. On entend par boucle fermée, des lignes de métal présentant au moins une intersection avec une autre ligne de métal dans la zone délimitée par la première partie 31. On entend par boucle ouverte, des lignes de métal s'étendant entre une première extrémité 36a et une extrémité distale 36b, et ne présentant aucune intersection avec d'autres lignes de métal dans la zone délimitée par la deuxième partie 32.

De préférence, la première partie 31 de l'étiquette 24 est complètement recouverte de métal de sorte à alourdir la masse de l'étiquette 24 et par conséquent celle de la carte à puce 10. La couche de métal recouvrant la première partie 31 de l'étiquette 24 est réalisé en métal, de préférence ayant une faible conductivité électrique comme l'Aluminium ou les oxydes de métaux comme l'oxyde de cuivre. Des métaux à forte conductivité électrique peuvent également être utilisés (Cu, Ag, Au ) grâce à la faible épaisseur de cette couche...]. Cette couche présente une épaisseur de quelques centaines de nm à quelques dizaines de µm avec la condition que l'épaisseur totale de la carte demeure dans la plage ISO 7810, tel qu'indiqué plus en avant dans la description.

La deuxième partie 32 de l'étiquette 24 est formée par gravure de deuxièmes lignes 36 de métal sur le substrat 26, ces deuxièmes lignes 36 de métal formant des boucles ouvertes et étant isolées électriquement les unes des autres. Selon une variante de réalisation visible sur la figure 3, la deuxième partie 32 de l'étiquette 24 est délimitée par un contour 38 qui est tracé par une ligne fictive reliant les premières extrémités, ou extrémités proximales, puis les extrémités distales des deuxièmes lignes 36 de métal. Comme représenté à la figure 3, la ligne fictive joignant les extrémités proximales est sensiblement superposée au contour 18 de la cavité 16.

L'étiquette 24 est agencée sur le corps 12 de carte de sorte que l'antenne 22 ne soit recouverte que par la deuxième partie 32 du motif 30. Ainsi l'antenne 22 est recouverte uniquement par des deuxièmes lignes métalliques isolées électriquement les unes des autres, ce qui permet d'éviter l'apparition des courants de Foucault circulant sur ces deuxièmes lignes 36 de métal, lorsque la carte à puce 10 métallique est traversée par le champ magnétique du lecteur externe. En effet, ces deuxièmes lignes 36 métalliques, formant des boucles ouvertes, limitent les principales boucles de courant de Foucault susceptibles d'être générées au-dessus ou en dessous de l'antenne 22. De préférence, le contour 38 du motif 30 reliant les première extrémité 36a est sensiblement identique et superposé au contour 18 de la cavité 16.

Avantageusement, les premières lignes 34 métalliques et deuxièmes lignes 36 métalliques forment ensemble un motif 30 parfaitement discernable pour l'utilisateur. A cet effet, chaque deuxième ligne de la deuxième partie 32 du motif 30 prolonge une première ligne de la première partie 31 du motif 30, de sorte que la deuxième partie 32 du motif 30 forme la continuité de la première partie 31 du motif 30 pour former le motif 30 dans son intégralité. Cet enchaînement présente un aspect esthétique tout en gardant la fonctionnalité principale de l'étiquette 24, à savoir recouvrir l'antenne 22 sans perturber son fonctionnement.

L' adhésif 28 permettant la fixation de l'étiquette sera choisi parmi les adhésifs connus de l'homme du métier selon le type de fixation souhaitée, c'est-à-dire pour obtenir une fixation réversible, pour obtenir une étiquette 24 amovible, ou non réversible afin d'obtenir une étiquette 24 solidaire de la carte. Dans le cas où l'étiquette 24 est amovible, il peut être prévu des marques sur le corps 12 de carte afin de guider l'utilisateur pour le positionnement de l'étiquette 24. Et l'étiquette 24 métallique est positionnée de sorte que seule la deuxième partie 32 du motif 30 recouvre l'antenne 22

Selon un mode de réalisation préféré, la deuxième partie 32 du motif 30 recouvre au maximum une portion de surface formée par l'antenne 22. Cette portion est au maximum la moitié de la surface de l'antenne 22. L'antenne 22 est formée de spires enroulées de l'extérieur vers l'intérieur, et la surface de l'antenne 22 est délimitée par la spire la plus extérieure. La deuxième partie 32 du motif 30 recouvrant l'antenne 22, recouvre au plus la moitié de la surface délimitée par la spire extérieure. Ces dispositions assurent le bon fonctionnement de l'antenne 22 pour que cette dernière puisse communiquer avec le terminal externe sans perturbation.

De plus, les deuxièmes lignes 36 de métal recouvrant la surface de l'antenne 22 sont agencées de sorte que le cumul de surface formée par les deuxièmes lignes 36 soit inférieur à la moitié de la surface de l'antenne 22 recouverte par la deuxième partie 32 du motif 30 afin que l'étiquette 24 n'entrave pas la communication radiofréquence entre l'antenne 22 et le terminal.

De manière avantageuse, dans le cadre de la condition énoncée au paragraphe précédent, les deuxièmes lignes présentent une largeur de 1mm maximum. Cette largeur répond au meilleur compromis entre la difficulté de réalisation des lignes très fines pour avoir une bonne visibilité des motifs et l'impact du métal sur le flux magnétique et donc sur les performances de l'antenne.

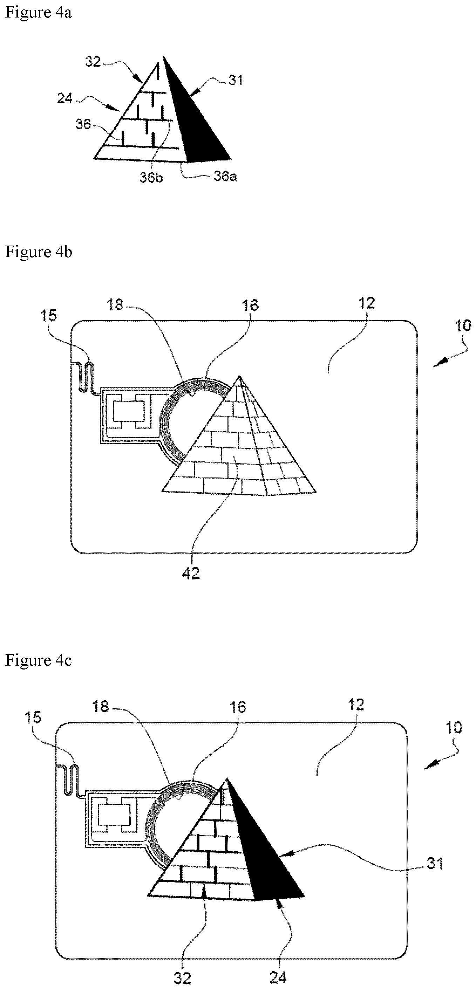

Selon un mode de réalisation illustré à la figure 4c, l'étiquette 24 métallique est associée à des éléments d'impression 42 réalisés sur la carte pour faciliter son positionnement. A cet effet, les éléments d'impression 42 sont formés par le revêtement déposé sur la couche métallique 14, ou encore par impression sur la couche plastique 40 transparente recouvrant la couche métallique 14. Les éléments d'impression 42 comprennent des marques de positionnement pour guider le placement de l'étiquette 24 sur le corps 12 de carte. Ces marques de positionnement peuvent être de simples motifs, tels qu'un point ou une croix, ou encore des motifs complexes complémentaires du motif formé par la deuxième partie 32 de l'étiquette 24. Tel que visible sur la figure 4b, les éléments d'impression 42 illustrent une pyramide formée de pavés. Chacun des pavés, forme un motif complémentaire permettant d'ajuster l'étiquette 24. A cet effet, l'étiquette 24 présente des deuxièmes lignes 36 de métal dessinant des pavés d'une pyramide facilement superposable aux pavés imprimés sur la carte. IL est alors plus aisé de mettre en place l'étiquette 24 métallique sur le corps 12 de carte, lors de la fabrication ou lors de l'utilisation par le détenteur de la carte. De plus cela permet de former un motif 30 coloré sur la deuxième partie 32 de l'étiquette 24.

Dans le cas où la carte à puce 10 comporte une puce intégrée à l'intérieur du corps 12, c'est-à-dire fixée directement sur les extrémités de l'antenne 22, il sera vérifié que l'étiquette 24 ne recouvre la puce de sorte que la puce soit positionnée en regard d'une zone dépourvu de lignes.

## Revendications

1. Carte à puce (10) comprenant
- un corps (12) de carte formé d'au moins une couche diélectrique et une couche métallique (14) superposée à la couche diélectrique
- la couche métallique (14) comprenant une cavité (16) traversant son épaisseur et présentant un contour (18), la couche métallique comprenant en outre une fente (15) traversant son épaisseur et s'étendant depuis la cavité (16) vers un bord du corps de carte,
- la carte comprenant en outre une antenne (22) s'étendant dans un plan de la cavité (16) de la couche métallique (14),
**caractérisée en ce que** la carte comprend en outre au moins une étiquette (24) métallique recouvrant au moins partiellement la cavité (16) et l'antenne (22), l'étiquette étant fixée sur l'une des faces de la carte,
l'étiquette (24) métallique comportant une couche métallique (14), la couche métallique (14) comportant un motif représenté par des lignes de métal gravées,
le motif de l'étiquette (24) comportant une première partie (31) formée de premières lignes (34) de métal gravées délimitant au moins une zone au moins partiellement métallique et une deuxième partie (32) constituée de deuxièmes lignes (36) de métal gravées formant uniquement des boucles ouvertes
chaque deuxième ligne de la deuxième partie (32) du motif (30) prolonge une première ligne de la première partie (31) du motif (30), de sorte que la deuxième partie (32) du motif (30) forme la continuité de la première partie 31 du motif (30) pour former le motif (30) dans son intégralité,
et **en ce que** l'étiquette (24) métallique est positionnée de sorte que seule la deuxième partie (32) du motif (30) soit disposée en regard de l'antenne (22).

2. Carte à puce (10) métallique selon la revendication 1, dans laquelle les deuxièmes lignes (36) de métal s'étendent entre une extrémité proximale (36a) et une extrémité distale (36b) et ne présentent aucune intersection avec une autre première ou deuxième ligne de métal, Le contour (38) de la deuxième partie (32) est délimité par la ligne fictive joignant l'ensemble des points formant les extrémités proximales et les extrémités distales des deuxièmes lignes (36) de métal de la deuxième partie (32), la ligne fictive joignant les extrémités proximales étant sensiblement superposée au contour (18) de la cavité (16).

3. Carte à puce (10) métallique selon l'une des revendications précédentes, dans laquelle, l'étiquette (24) métallique est amovible.

4. Carte à puce (10) métallique selon l'une des revendications précédentes, selon laquelle la deuxième partie (32) du motif (30) recouvre au plus la moitié de la surface de l'antenne (22).

5. Carte à puce (10) métallique selon l'une des revendications précédentes, dans laquelle les deuxièmes lignes de métal recouvrant la surface de l'antenne (22) sont agencées de sorte que le cumul de surface formée par les deuxièmes lignes (36) est inférieur à la moitié de la surface de l'antenne (22) recouverte par la deuxième partie (32) du motif (30).

6. Carte à puce 10 métallique selon l'une des revendications précédentes, dans laquelle les deuxièmes lignes (36) de métal présentent une largeur de 1mm maximum.

7. Carte à puce (10) métallique selon l'une des revendications précédentes, dans laquelle le corps (12) de carte comporte une couche plastique (40) imprimée recouvrant la couche en métal et la cavité (16), la couche imprimée présentant des marques de positionnement pour positionner l'étiquette (24) sur le corps (12) de carte.

8. Carte à puce (10) selon la revendication précédente, dans laquelle la couche imprimée forme une impression (42) recouvrant la cavité (16), l'impression (42) étant complémentaire aux deuxièmes lignes (36) de métal, de sorte guider le positionnement de l'étiquette (24) sur la carte et de sorte à former une deuxième partie (32) de motif (30) colorée

9. Carte à puce (10) métallique selon l'une des revendications précédentes, dans laquelle les lignes en métal sont formées à partir d'un métal peu conducteur présentant une conductivité inférieure ou égale à 40*10⁶ *S.m*⁻¹.

10. Carte à puce (10) métallique selon l'une des revendications précédentes, dans laquelle une puce est connectée aux extrémités de l'antenne (22) et intégrée dans le corps (12) de la carte à puce, la puce étant positionnée en regard d'une zone dépourvue de lignes métalliques.

## Patentansprüche

1. Chipkarte (10), die Folgendes aufweist:
- einen Kartenkörper (12), der aus mindestens einer dielektrischen Schicht und einer metallischen Schicht (14) besteht, die der dielektrischen Schicht überlagert ist,
- wobei die metallische Schicht (14) einen Hohlraum (16) aufweist, der durch ihre Dicke verläuft und eine Kontur (18) darstellt, wobei die metallische Schicht ferner einen Schlitz (15) aufweist, der durch ihre Dicke verläuft und sich von dem Hohlraum (16) zu einem Rand des Kartenkörpers erstreckt,
- wobei die Karte darüber hinaus eine Antenne (22) aufweist, die sich in einer Ebene des Hohlraums (16) der metallischen Schicht (14) erstreckt,
**dadurch gekennzeichnet, dass** die Karte ferner mindestens ein metallisches Etikett (24) aufweist, das den Hohlraum (16) und die Antenne (22) mindestens teilweise bedeckt, wobei das Etikett an einer der Seiten der Karte befestigt ist, wobei das metallische Etikett (24) eine metallische Schicht (14) aufweist, wobei die metallische Schicht (14) ein Muster aufweist, das durch gravierte Metalllinien dargestellt wird,
wobei das Muster des Etiketts (24) einen ersten Teil (31), der aus ersten gravierten Metalllinien (34) gebildet ist, die mindestens einen mindestens teilweise metallischen Bereich begrenzen, und einen zweiten Teil (32) aufweist, der aus zweiten gravierten Metalllinien (36) gebildet ist, die nur offene Schleifen bilden,
wobei jede zweite Linie des zweiten Teils (32) des Musters (30) eine erste Linie des ersten Teils (31) des Musters (30) verlängert, so dass der zweite Teil (32) des Musters (30) die Fortsetzung des ersten Teils 31 des Musters (30) bildet, um das Muster (30) in seiner Gesamtheit zu bilden,
und dass das metallische Etikett (24) so positioniert ist, dass nur der zweite Teil (32) des Musters (30) gegenüber der Antenne (22) angeordnet ist.

2. Metallische Chipkarte (10) nach Anspruch 1, wobei sich die zweiten Metalllinien (36) zwischen einem proximalen Ende (36a) und einem distalen Ende (36b) erstrecken und keine Schnittpunkte mit einer anderen ersten oder zweiten Metalllinie aufweisen und die Kontur (38) des zweiten Teils (32) durch die fiktive Linie begrenzt wird, die alle Punkte verbindet, die die proximalen Enden und die distalen Enden der zweiten Metalllinien (36) des zweiten Teils (32) bilden, wobei die fiktive Linie, die die proximalen Enden verbindet, im Wesentlichen mit der Kontur (18) des Hohlraums (16) überlagert ist.

3. Metallische Chipkarte (10) nach einem der vorhergehenden Ansprüche, wobei das metallische Etikett (24) abnehmbar ist.

4. Metallische Chipkarte (10) nach einem der vorhergehenden Ansprüche, wobei der zweite Teil (32) des Musters (30) höchstens die Hälfte der Fläche der Antenne (22) bedeckt.

5. Metallische Chipkarte (10) nach einem der vorhergehenden Ansprüche, wobei die zweiten Metalllinien, die die Oberfläche der Antenne (22) bedecken, so angeordnet sind, dass die durch die zweiten Linien (36) gebildete Flächensummierung weniger als die Hälfte der Oberfläche der Antenne (22) beträgt, die durch den zweiten Teil (32) des Musters (30) bedeckt wird.

6. Metallische Chipkarte 10 nach einem der vorhergehenden Ansprüche, wobei die zweiten Metalllinien (36) eine Breite von höchstens 1 mm aufweisen.

7. Metallische Chipkarte (10) nach einem der vorhergehenden Ansprüche, wobei der Kartenkörper (12) eine bedruckte Kunststoffschicht (40) aufweist, die die metallische Schicht und den Hohlraum (16) bedeckt, wobei die bedruckte Schicht Positionierungsmarkierungen aufweist, um das Etikett (24) auf dem Kartenkörper (12) zu positionieren.

8. Chipkarte (10) nach dem vorhergehenden Anspruch, wobei die bedruckte Schicht einen Druck (42) bildet, der den Hohlraum (16) bedeckt, wobei der Druck (42) komplementär zu den zweiten Linien (36) aus Metall ist, um die Positionierung des Etiketts (24) auf der Karte zu führen und um einen zweiten Teil (32) eines farbigen Musters (30) zu bilden.

9. Metallische Chipkarte (10) nach einem der vorhergehenden Ansprüche, wobei die Metallleitungen aus einem wenig leitfähigen Metall mit einer Leitfähigkeit von 40*10⁶ S.m⁻¹ oder weniger gebildet sind.

10. Metallische Chipkarte (10) nach einem der vorhergehenden Ansprüche, wobei ein Chip mit den Enden der Antenne (22) verbunden und in den Körper (12) der Chipkarte integriert ist, wobei der Chip gegenüber einem Bereich positioniert ist, der frei von metallischen Linien ist.

## Claims

1. Chipcard (10) comprising
- a card body (12) formed by at least one dielectric layer and one metal layer (14) superposed on the dielectric layer,
- the metal layer (14) comprising a cavity (16) passing through its thickness and having an outline (18), the metal layer further comprising a slit (15) passing through its thickness and extending from the cavity (16) to an edge of the card body,
- the card further comprising an antenna (22) extending in a plane of the cavity (16) of the metal layer (14),
**characterized in that** the card further comprises at least one metal label (24) at least partially covering the cavity (16) and the antenna (22), the label being fixed onto one of the faces of the card,
the metal label (24) comprising a metal layer (14), the metal layer (14) comprising a pattern represented by etched metal lines,
the pattern of the label (24) comprising a first part (31) formed by first etched metal lines (34) delimiting at least one zone that is at least partially of metal,
and a second part (32) composed of second etched metal lines (36) forming only open loops,
each second line of the second part (32) of the pattern (30) prolongs a first line of the first part (31) of the pattern (30), such that the second part (32) of the pattern (30) forms the continuity of the first part (31) of the pattern (30) to form the pattern (30) in its entirety,
and **in that** the metal label (24) is positioned such that only the second part (32) of the pattern (30) is disposed opposite the antenna (22).

2. Metallic chipcard (10) according to Claim 1, wherein the second metal lines (36) extend between a proximal end (36a) and a distal end (36b) and do not have any intersection with another first or second metal line, the outline (38) of the second part (32) is delimited by the hypothetical line joining all of the points forming the proximal ends and the distal ends of the second metal lines (36) of the second part (32), the hypothetical line joining the proximal ends being substantially superposed on the outline (18) of the cavity (16).

3. Metallic chipcard (10) according to one of the preceding claims, wherein the metal label (24) is removable.

4. Metallic chipcard (10) according to one of the preceding claims, according to which the second part (32) of the pattern (30) covers at most half of the surface of the antenna (22).

5. Metallic chipcard (10) according to one of the preceding claims, wherein the second metal lines covering the surface of the antenna (22) are arranged such that the total surface formed by the second lines (36) is less than half of the surface of the antenna (22) covered by the second part (32) of the pattern (30).

6. Metallic chipcard (10) according to one of the preceding claims, wherein the second metal lines (36) have a maximum width of 1 mm.

7. Metallic chipcard (10) according to one of the preceding claims, wherein the card body (12) comprises a printed plastic layer (40) covering the metal layer and the cavity (16), the printed layer having positioning marks for positioning the label (24) on the card body (12).

8. Chipcard (10) according to the preceding claim, wherein the printed layer forms a print (42) covering the cavity (16), the print (42) complementing the second metal lines (36), so as to guide the positioning of the label (24) on the card and so as to form a second part (32) of pattern (30) that is coloured.

9. Metallic chipcard (10) according to one of the preceding claims, wherein the metal lines are formed from a metal of low conductivity exhibiting a conductivity less than or equal to 40*10⁶*S*.*m*⁻¹.

10. Metallic chipcard (10) according to one of the preceding claims, wherein a chip is connected to the ends of the antenna (22) and incorporated in the body (12) of the chipcard, the chip being positioned opposite a zone without metal lines.
